# EUROPEAN PATENT SPECIFICATION

(11) **EP 0 745 988 B1**
(45) Date of publication and mention of the grant of the patent: **10.03.1999**
(21) Application number: 96110664.8
(22) Date of filing: 15.04.1992
(51) Int. Cl.: G11B 15/665

(54) **Loading post driving device**
Antriebsvorrichtung für einen Ladestift
Dispositif d'entraînement pour un galet de chargement

(30) Priority: 16.04.1991 JP 83887/91; 17.04.1991 JP 85062/91; 17.04.1991 JP 85064/91; 17.04.1991 JP 85071/91
(43) Date of publication of application: 04.12.1996
(62) Divisional of application: 92303400.3
(73) Proprietor: MATSUSHITA ELECTRIC INDUSTRIAL CO., LTD., Kadoma-shi, Osaka-fu (JP)
(72) Inventor: Konishi, Akio, Hyogo (JP); Saito, Yoshiyuki, Katano-shi, Osaka (JP); Takeda, Shuzo, Hirakata-shi (JP); Yoshio, Hideaki, Moriguchi-shi (JP); Kurumatani, Hiroshi, Amagasaki-shi, Hyogo (JP)
(74) Representative: Sorrell, Terence Gordon

(56) References cited:
- EP-A- 0 478 278
- US-A- 4 561 029
- PATENT ABSTRACTS OF JAPAN, unexamined applications, P field, vol. 14, no. 64, February 6, 1990 THE PATENT OFFICE JAPANESE GOVERNMENT page 79 P 1002; & JP-A-01 286 166 (HITACHI)

## Description

The present invention relates to a loading post driving device for a magnetic recording/playback apparatus in which a magnetic tape is wound around a cylindrical rotary head cylinder, having a rotary head built therein, to record/playback a signal by the rotary head.

A prior art loading post driving device is described below with reference to Figs. 5 and 6 of the drawings. Such a device is also disclosed in EP-A-0478278 which comprises a part of the state of the art relevant to the present application under Article 54(3,4) EPC.

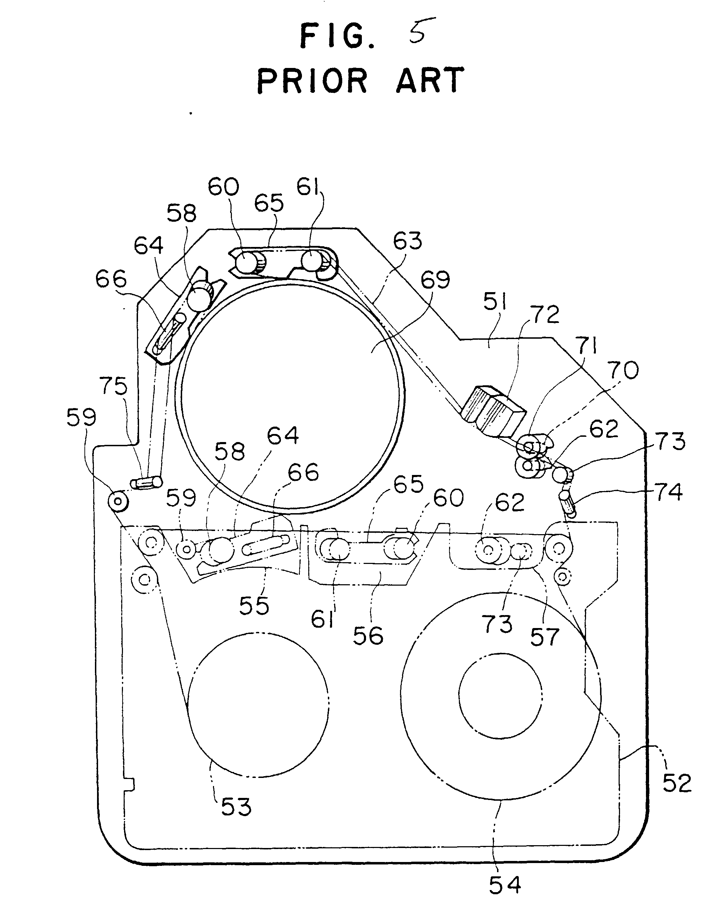

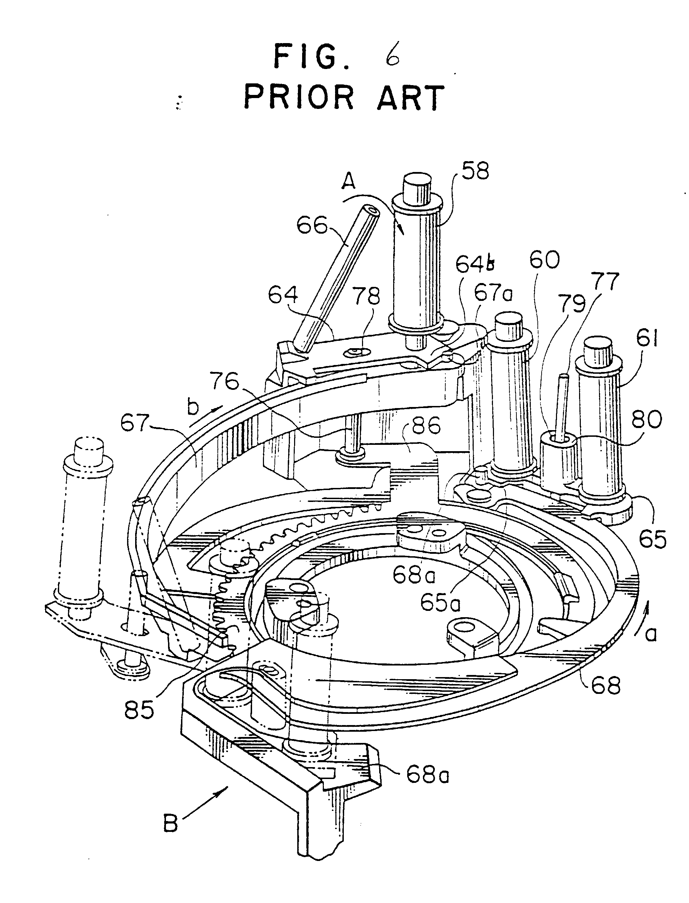

Fig. 5 is a schematic top plan view of the loading post driving device and Fig. 6 is a perspective view showing principal parts of the loading post driving device. Note that a rotary head cylinder 69 is omitted from Fig. 6 for brevity of the drawing and convenience of the description.

In Fig. 5, 51 denotes a chassis and 52 a tape cassette loaded on the chassis 51. A supply reel 53 and a take-up reel 54 are provided in the tape cassette 52. When the tape cassette 52 is loaded on the chassis 51, a supply side loading roller post 58 and a tension post 59; first and second take-up loading roller posts 60 and 61; and a pinch roller 62 are respectively positioned on the inside of a magnetic tape 63 in recesses 55, 56 and 57 formed in a front edge surface of the tape cassette 52. Denoted by 64 and 65 are a supply side movable carrier (tape carrier shuttle) and a take-up side movable carrier (tape carrier shuttle) on which the supply side loading roller post 58 and the first and second take-up side loading roller posts 60 and 61 are mounted, respectively. The supply side tape carrier shuttle 64 is also provided with an inclined post 66, in addition to the loading roller post 58, the inclined post 66 being positioned within the recess 55 together with the loading roller post 58. Denoted by 67 and 68 are a supply side arc shaped loading guide and take-up side arc shaped loading guide disposed along the circumference of a rotary head cylinder 69 as shown in Fig. 6, the guides 67 and 68 provided to respectively guide the supply side shuttle 64 and the take-up side tape carrier shuttle 65 during the operation of loading the magnetic tape 63. Also as shown in Fig. 6, the supply side loading guide 67 is arranged such that an end of the guide 67 along which the shuttle 64 returnably moves is raised higher than a proximal end of the guide 67 which is a home position of the shuttle 64. On the other hand, the take-up side loading guide 68 is arranged such that an end of the guide 68 along which the shuttle 65 returnably moves is lower than a proximal end of the guide 68 which is a home position of the shuttle 65.

The supply side shuttle 64 is driven by a supply side ring 85 having an arm 86 on a distal end portion of which a supply side drive shaft 76 is mounted. As will be seen from Fig. 6 the supply side tape carrier shuttle 64 is arranged to be vertically movable along the drive shaft 76 through a hole 78 in the shuttle 64. The rotary head cylinder 69 is attached substantially vertically with respect to the chassis 51. When the supply side shuttle 64 is moved along the supply side loading guide 67, the supply side loading roller post 58 withdraws the magnetic tape 63 from the supply reel 53 and winds it around the rotary head cylinder 69 in a direction extending obliquely upwardly along a left side surface area of the cylinder 69. When the take-up side tape carrier shuttle 65 is moved along the take-up side loading guide 68, the take-up side loading roller post 60 withdraws the magnetic tape 63 from the take-up reel 54 and winds it around the rotary head cylinder 69 in a direction extending obliquely downwardly along a right side surface area of the cylinder 69.

Denoted by 70 is a capstan provided on the chassis at a location outside where the tape cassette 52 is to be loaded, the capstan 70 being supported at its upper and lower ends by bearings 71 and attached to the chassis 51 such that it is inclined relative to the chassis at an angle substantially equal to those of the take-up side loading roller posts 60 and 61 at the tape terminal loading position. The inclined capstan 70 is brought into full contact with the magnetic tape 63 over its entire width, the tape running obliquely upwardly from the take-up side loading roller post 61 along a sloped path and being inclined forwardly. During completion of the tape loading operation, the capstan 70 is in press-contact with the pinch roller 62 which is moved from its position in the recess 57 of the tape cassette 52 so that the magnetic tape 63 is held between the capstan 70 and the pinch roller 62 to be driven thereby . Incidentally, the pinch roller 62 is arranged to have the same angle of inclination as that of the capstan 70 in order to be in full contact with the capstan 70 over the entire width of the tape. Denoted by 72 is an audio-control head provided at a location in the vicinity of the capstan 70 between the take-up side second loading roller post 61 when at the tape terminal loading position and the capstan 70. The audio-control head 72 is attached to the chassis 51 in such a manner that it is inclined at the same angle as that of the capstan 70 in order to facilitate contact between the audio-control head 72 and the magnetic tape 63 which is inclined forwardly and runs obliquely upwardly along a sloped path from the take-up side second loading roller post 61 to the capstan 70. Denoted by 73 is an auxiliary roller post which moves interlockingly with the pinch roller 62 such that it is positioned in the recess 57 of the tape cassette 52 before the start of the tape loading operation, and it moves together with the pinch roller 62 during the tape loading operation, thereby guiding the magnetic tape 63 running between the capstan 70 and the pinch roller 62 to a fixed inclined post 74. As regards the magnetic tape 63 fed from the take-up side second loading roller post 61 through the capstan 70 and the auxiliary roller post 73 whilst being in a forwardly-inclined posture, torsion of the magnetic tape 63 generated when the running path of the tape is converted from the sloped path into a horizontally running path is corrected by the inclined fixed post 74 which is slantingly attached to the chassis 51 before the magnetic tape 63 reaches the tape cassette 52, then the tape is wound around the take-up reel 54 of the tape cassette 52.

In the loading post driving device, as shown in Fig. 6, the tape carrier shuttles 64 and 65 are provided with holes 78 and 79 through which the shuttles 64 and 65 are engaged with drive shafts 76 and 77, respectively. For smooth movement of the shuttles 64 and 65 in the vertical and lateral directions, the holes 78 and 79 are formed to be somewhat larger than the diameters of the drive shafts 76 and 77. Therefore, the positions of loading posts can become so unstable that they may incline undesirably. A means for preventing such undesirable inclination is provided by a projection 80 on the take-up side shuttle 65 which supports the drive shaft 77 over a larger height, thereby increasing the stability of the loading post 61, as illustrated in Fig. 6.

With regard to the supply side shuttle 64, however, since the inclined post 66 slants towards a location above the hole 78, it is impossible to provide a long projection extending upwardly as in the take-up side shuttle 65. In addition, because the supply side loading post 58 is at a higher level relative to the drive shaft 76 at the tape terminal loading position, even if a short projection is provided on the shuttle 64, the drive shaft 76 can not engage with the projection and thus stability cannot be enhanced and the loading post may incline toward the rotary head cylinder 69 as indicated by an arrow A in Fig. 6.

Thus, the above prior art arrangement suffers from a problem in that when the unstable loading post inclines toward the rotary head cylinder, it may damage the rotary head cylinder or interfere with rotation thereof by possible contact between the two members.

An object of the present invention is to provide a loading post driving device with high reliability which can prevent a rotary head cylinder from being damaged or interfered with in its rotation, while maintaining the feature of the magnetic recording/playback apparatus of being light and compact.

In the light of the above object, the present invention provides a loading post driving device for drawing out a magnetic tape from a tape cassette and winding said tape around a rotary head cylinder having a rotary head built therein, comprising: a tape carrier shuttle having a loading post for withdrawing the tape, said loading post being mounted on the shuttle and extending upwardly therefrom; a substantially arc shaped loading guide for guiding said shuttle along the circumference of said rotary head cylinder between a home position from which the tape is withdrawn and an end position at which withdrawal of the tape is completed, the loading guide at one of said positions being raised higher than at the other of said positions; a drive ring having a drive shaft for transmitting driving force from a drive source to said shuttle, said drive shaft being mounted on the drive ring and extending upwardly therefrom and being inserted in a hole in the shuttle such that the shuttle moves vertically on said drive shaft as said drive ring turns to cause said shuttle to move between said home position and said end position, and the hole in the shuttle is such that there is play between said hole and said drive shaft, characterised in that a press means is provided for pressing said drive shaft within the hole in a direction relative to the shuttle to keep said loading post apart from the rotary head cylinder.

With the above arrangement, the direction of inclination of the loading post is limited to a direction in which the loading post moves away from the rotary head cylinder. Thus, the upper end of the holding post can always be kept apart from the rotary head cylinder so that the holding post will not contact with it.

The features of the present invention will be described with reference to the drawings, of which:-
Fig. 1 is an enlarged partial view of an embodiment of the loading post holding device of the invention;
Fig. 2 is a breakdown perspective view of the loading post holding device of Fig. 1;
Fig. 3A is a bottom view of a supply side tape carrier shuttle forming part of the loading post holding device of Fig. 1;
Fig. 3B shows a coil spring removed from the supply side shuttle;
Fig. 3C shows the coil spring of Fig. 3B;
Fig. 4A is a view showing the relationship between a loading post and a drive shaft in the embodiment of the invention;
Fig 4B is a view showing the loading post holding device of the invention, in use;
Fig. 5 is a schematic top plan view of a prior art magnetic recording/playback apparatus post driving device of Fig. ;and
Fig. 6 is an enlarged perspective view showing principal parts of the prior art loading post driving device of Fig. 5.

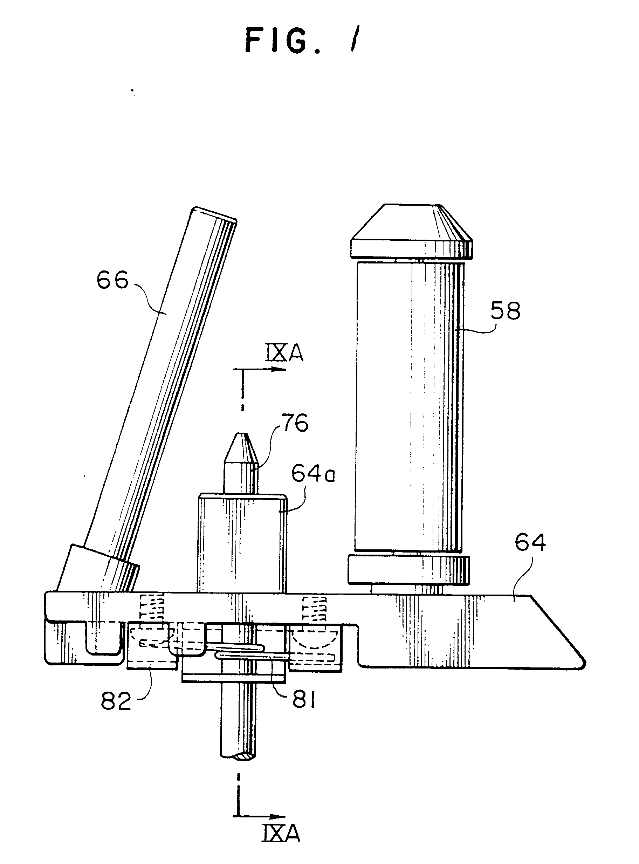

An embodiment of the invention will be described with reference to Figs. 1 to 3. Note that the same components in this embodiment as those in the prior art are denoted by the same reference numerals and the description concerning those components is omitted.

Fig. 1 is an enlarged view showing principal parts of a loading post driving device in a magnetic recording/playback apparatus according to the embodiment of the invention. Fig. 1 shows a state where a supply side tape carrier shuttle 64 is engaged with a drive shaft 76. This example is different from the prior art device of figure 6 in that a coil spring 81 is provided on the underside of the supply side shuttle 64. 82 denotes a fixture also provided on the underside of the supply side shuttle 64 for retaining the coil spring 81. Further, 64a is a projection formed on the top surface of the supply side tape carrier shuttle 64. Since an inclined post 66 is slanting toward a location above the projection 64a, the projection can only be increased by so much in its height.

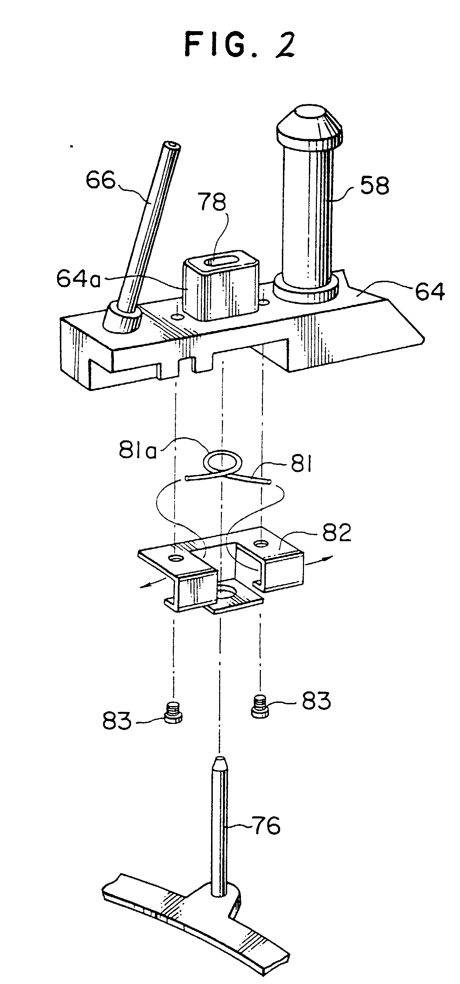

Fig. 2 is an exploded perspective view of the loading post driving device shown in Fig. 1. The coil spring 81 is attached to the fixture 82 which is in turn fixed by screws 83 to the underside of the supply side shuttle 64. The supply side drive shaft 26 is assembled by being inserted through both a ring portion 81a of the coil spring 81 and a hole 78 of the projection 64a on the supply side shuttle 64.

Figs. 3A to 3C are views illustrating an operation of the coil spring 81 provided on the supply side shuttle 64. For the sake of brevity, the fixture 82 is shown in a simplified form by illustrating only its claws 82a and 82b.

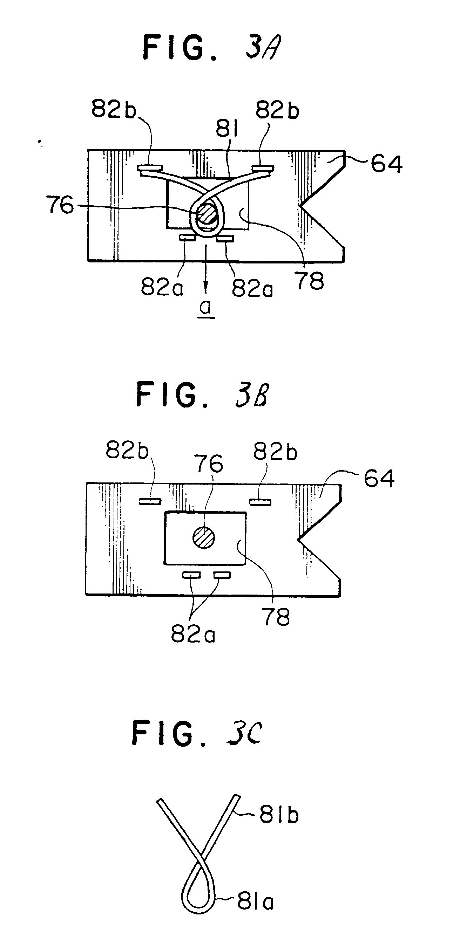

Fig. 3A shows the supply side tape carrier shuttle 64 as viewed from the backside. As seen from the drawing, the coil spring 81 is retained at both ends by the claws 82a and 82b. Figs. 3B and 3C show the supply side shuttle 64 and the coil spring 81, respectively, which are disassembled in contrast with Fig. 3A. As seen from Fig. 3C, in a normal state, free end sections 81b of the coil spring 81 are not so bent with respect to the ring portion 81a. Therefore, when the coil spring 81 is attached to the supply side shuttle 64 such that the free end sections 81b are retained in a bent state by the claws 82a and 82b as shown in Fig. 3A, an urging force in a direction of an arrow a in Fig. 3A is applied to the ring portion 81a of the coil spring 81. Thus, an urging force in the direction of the arrow a is also applied to the drive shaft 76.

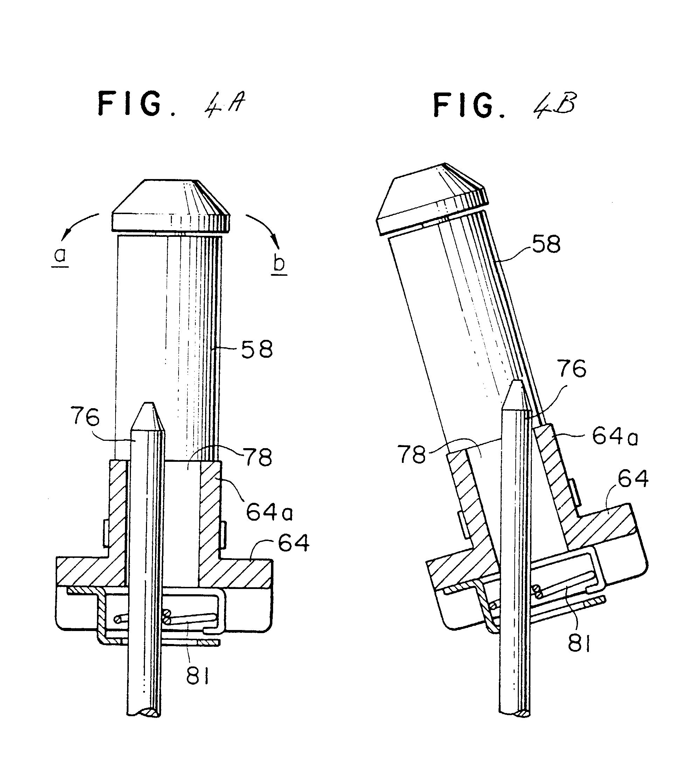

Figs 4A and 4B are each a cross-sectional view taken along a line IXA - IXA in Fig.1, showing the relationship between a loading post 58 and the drive shaft 76 resulting from the coil spring 81 pressing on the drive shaft 76. Since the coil spring 81 provided on the underside of the supply side tape carrier shuttle 64 presses the drive shaft 76 aside as explained above, the drive shaft 76 is always in a state biased to one side in the hole 78 as shown in Fig. 4A. In this state, the drive shaft 76 is fixed vertically relative to the chassis at all times. Accordingly, even when the supply side loading post 58 is inclined relative to the drive shaft 76, it can incline in a direction of an arrow a in Fig. 4A to come into a state as shown in Fig. 4B, but can never incline in a direction of an arrow b. This is because the drive shaft 76 is positioned by the coil spring 81 against the lower end of the hole 78.

Thus, by arranging the rotary head cylinder on the side indicated by the arrow b in Fig 4A, the loading post can be prevented from contacting with the rotary head cylinder.

Stated in another way, inclining of the loading post can be limited to only one direction by providing the coil spring on the underside of the supply side shuttle, and the loading post can be prevented from damaging the rotary head cylinder or interfering with its rotation by allowing the loading post to incline away from the rotary head cylinder. As a result, a loading post driving device with high reliability can be provided.

While the coil spring is provided on the supply side shuttle in this example, the present invention is not particularly limited to such an arrangement. For instance, the coil spring may be provided on only the take-up side tape carrier shuttle or on both of the supply side and take-up side shuttles.

Also, while the pressing means is provided on the under-side of the supply side shuttle in this example, the present invention is not particularly limited to such an arrangement. For instance, the pressing means may be provided on the upper side of the supply side shuttle. In this case, however, a direction of pressing the drive shaft must be opposite to that in the above embodiment to obtain a similar effect, i.e. urging the drive shaft in a direction toward the rotary head cylinder.

Further, while the coil spring is used as a pressing means in this example, the invention is not particularly limited to such an arrangement. For instance, a leaf spring may be used instead.

As set forth above, according to the embodiment of the present invention, since a tape carrier shuttle is provided with a pressing means to press a drive shaft, the upper end of a loading post can be always kept apart from a rotary head cylinder. It is thus possible to provide a loading post driving device which can prevent the loading post from damaging the rotary head cylinder or interfering with its rotation, and can allow a miniature, light magnetic recording/playback apparatus with high reliability to be realised.

## Claims

1. A loading post driving device for drawing out a magnetic tape from a tape cassette and winding said tape around a rotary head cylinder having a rotary head built therein, comprising:- a tape carrier shuttle (64) having a loading post (58) for withdrawing the tape (30), said loading post (58) being mounted on the shuttle (64) and extending upwardly therefrom; a substantially arc shaped loading guide (26) for guiding said shuttle (64) along the circumference of said rotary head cylinder (28) between a home position from which the tape (30) is withdrawn and an end position at which withdrawal of the tape (30) is completed, the loading guide (26) at one of said positions being raised higher than at the other of said positions; a drive ring (35) having a drive shaft (76) for transmitting driving force from a drive source to said shuttle (64), said drive shaft (76) being mounted on the drive ring (35) and extending upwardly therefrom and being inserted in a hole (78) in the shuttle (64) such that the shuttle (64) moves vertically on said drive shaft (76) as said drive ring (35) turns to cause said shuttle (64) to move between said home position and said end position, and the hole (78) in the shuttle (64) is such that there is play between said hole (78) and said drive shaft (76), characterised in that a press means (81,82,83) is provided for pressing said drive shaft (76) within the hole (78) in a direction relative the shuttle to keep said loading post (58) apart from the rotary head cylinder (28).

2. A loading post driving device as claimed in claim 1, characterised in that said press means (81,82,83) is provided on the underside of said tape carrier shuttle (64) urging, on said drive shaft (76) in a direction away from said rotary head cylinder (28) against the lower end of the hole (78).

3. A loading post driving device as claimed in claim 1, characterised in that said press means (81,82,83) is provided on the upper side of said tape carrier shuttle (64) urging on, said drive shaft (76) in a direction toward said rotary head cylinder (28) against the upper end of the hole (78).

4. A loading post driving device as claimed in any one of claims 1 to 3, characterised in that said press means (81,82,83) is a coil spring (81) or a leaf spring.

## Patentansprüche

1. Ladestiftantriebsvorrichtung zum Herausziehen eines Magnetbandes aus einer Bandkassette und Legen des Bandes um eine rotierende Kopftrommel, in die ein rotierender Kopf eingebaut ist, umfassend: einen Bandträgerhebel (64), der einen Ladestift (58) zum Herausziehen des Bandes (30) hat, welcher Ladestift (58) an dem Hebel angebracht ist und sich von diesem nach oben erstreckt; eine im wesentlichen bogenförmige Ladeführung (26) zum Führen des Hebels (64) entlang dem Umfang der rotierenden Kopftrommel (28) zwischen einer Ausgangsstellung, von welcher das Band (30) herausgezogen wird, und einer Endstellung, in der das Herausziehen des Bandes (30) vollendet ist, wobei die Ladeführung (26) in einer der Positionen höher angehoben ist als in der anderen Position; einen Antriebszahnkranz (35), der einen Antriebsstift (76) zum Übertragen der Antriebskraft von einer Antriebsquelle zu dem Hebel (64) hat, welcher Antriebsstift (76) an dem Antriebszahnkranz (35) montiert ist und von diesem nach oben verläuft und in ein Loch (78) in dem Hebel (64) eingeführt ist, so daß der Hebel sich vertikal auf dem Antriebsstift (76) bewegt, wenn sich der Antriebszahnkranz (35) dreht, um zu veranlassen, daß sich der Hebel (64) zwischen der Ausgangsstellung und der Endstellung bewegt, wobei das Loch (78) in dem Hebel (64) so ausgeführt ist, daß Spiel zwischen dem Loch (78) und dem Antriebsstift (76) vorhanden ist, dadurch gekennzeichnet, daß eine Presseinrichtung (81, 82, 83) vorgesehen ist, um den Antriebsstift (76) innerhalb des Loches (78) in eine Richtung relativ zu dem Hebel zu drücken, daß der Ladestift (58) von der rotierenden Kopftrommel (28) getrennt gehalten wird.

2. Ladestiftantriebsvorrichtung nach Anspruch 1, dadurch gekennzeichnet, daß die Presseinrichtung (81, 82, 83) an der Unterseite des Bandträgerhebels (64) vorgesehen ist und den Antriebsstift (76) in eine von der rotierenden Kopftrommel (28) abgewandte Richtung gegen das untere Ende des Loches (78) drängt.

3. Ladestiftantriebsvorrichtung nach Anspruch 1, dadurch gekennzeichnet, daß die Presseinrichtung (81, 82, 83) an der Oberseite des Bandträgerhebels (64) vorgesehen ist und den Antriebsstift (76) in eine der rotierenden Kopftrommel (28) zugewandte Richtung gegen das obere Ende des Loches (78) drängt.

4. Ladestiftantriebsvorrichtung nach einem der Ansprüche 1 bis 3, dadurch gekennzeichnet, daß die Presseinrichtung (81, 82, 83) eine Schraubenfeder (81) oder eine Blattfeder ist.

## Revendications

1. Dispositif d'entraînement de colonne de chargement pour tirer une bande magnétique d'une cassette de bande et enrouler ladite bande autour d'un cylindre à tête rotative ayant une tête rotative incorporée au même, comprenant:- une navette porte-bande (64) ayant une colonne de chargement (58) pour retirer la bande (30), ladite colonne de chargement (58) étant montée sur la navette (64) et s'étendant vers le haut à partir de celle-ci; un guide de chargement (26) de forme essentiellement cintrée pour guider ladite navette (64) le long de la circonférence dudit cylindre à tête rotative (28) entre une position initiale à partir de laquelle la bande (30) est tirée et une position finale à laquelle le retrait de la bande (30) est terminé, le guide de chargement (26) à l'une desdites positions étant élevé plus haut qu'à l'autre desdites positions; une couronne d'entraînement (35) ayant un arbre d'entraînement (76) pour transmettre une force d'entraînement à partir d'une source d'entraînement à ladite navette (64), ledit arbre d'entraînement (76) étant monté sur la couronne d'entraînement (35) et s'étendant vers le haut à partir de celle-ci et étant inséré dans un trou (78) dans la navette (64) de sorte que la navette (64) se déplace verticalement sur ledit arbre d'entraînement (76) au fur et à mesure que ladite couronne d'entraînement (35) tourne pour causer le déplacement de ladite navette (64) entre ladite position initiale et ladite position finale, et le trou (78) dans la navette (64) est tel qu'il y a un jeu entre ledit trou (78) et ledit arbre d'entraînement (76), caractérisé en ce que un moyen de pression (81,82,83) est prévu pour appruyer ledit arbre d'entraînement (76) à l'intérieur du trou (78) dans une direction par rapport à la navette, afin de garder ladite colonne de chargement (58) éloignée du cylindre à tête rotative (28).

2. Dispositif d'entraînement de colonne de chargement tel que revendiqué dans la revendication 1, caractérisé en ce que ledit moyen de pression (81,82,83) est prévu sur le dessous de ladite navette porte-bande (64) poussant ledit arbre d'entraînement (76) dans une direction éloignée dudit cylindre à tête rotative (28)contre l'extrémité inférieure du trou (78).

3. Dispositif d'entraînement de colonne de chargement tel que revendiqué dans la revendication 1, caractérisé en ce que ledit moyen de pression (81,82,83) est prévu sur le dessus de ladite navette porte-bande (64) poussant ledit arbre d'entraînement (76) dans une direction vers ledit cylindre à tête rotative (28) contre l'extrémité supérieure du trou (78).

4. Dispositif d'entraînement de colonne de chargement tel que revendiqué dans l'une quelconque des revendications 1 à 3, caractérisé en ce que ledit moyen de pression (81,82,83) est un ressort hélicoïdal (81) ou un ressort à lame.
